## Europäisches Patentamt
## European Patent Office
## Office européen des brevets

(11) Veröffentlichungsnummer: **0 114 935**
A2

# (12) EUROPÄISCHE PATENTANMELDUNG

(21) Anmeldenummer: 83109988.2

(22) Anmeldetag: 06.10.83

(51) Int. Cl.³: **B 23 D 33/00**

(30) Priorität: 23.12.82 DE 3247705

(43) Veröffentlichungstag der Anmeldung:
08.08.84 Patentblatt 84/32

(84) Benannte Vertragsstaaten:
AT BE DE FR GB IT NL SE

(71) Anmelder: SIEMAG transplan Gesellschaft mit
beschränkter Haftung
Obere Industriestrasse 5
D-5902 Netphen 1(DE)

(72) Erfinder: Ganseuer, Horst
Am Alten Hahn 11
D-5910 Kreuztal 6(DE)

(74) Vertreter: Hemmerich, Friedrich Werner et al,
Patentanwälte F.W. Hemmerich Gerd Müller, Dipl.-Ing. D.
Grosse Felix Pollmeier Hammerstrasse 2
D-5900 Siegen 1(DE)

(54) Scherenanlage mit Inspektionsrollgang.

(57) Bei einer einen Inspektionsrollgang aufweisenden Scherenanlage zum Schopfen der Enden oder zum Abtrennen von Probestücken von zu Bunden gewickeltem Walzband soll die Bandinnenseite beim Abrollen des Bandes vom Walzbandbund nicht beschädigt werden. Dazu wird vorgeschlagen, daß die Schere ein ortsfest stehendes Untermesser in Höhe der Auflagefläche des Rollgangs aufweist, und daß der Verstellantrieb des um eine Welle schwenkbaren Obermessers unabhängig von den Verstellantrieben des ebenfalls um eine Welle schwenkbaren Öffnungsmeißels des Bundöffners betätigbar ist.

Fig. 1

EP 0 114 935 A2

PATENTANWÄLTE  F.W. HEMMERICH · GERD MÜLLER · D. GROSSE · F. POLLMEIER 0114935

03.12.1982                    gr.ni              40 722

SIEMAG transplan GmbH, 5902 Netphen 1

## Scherenanlage mit Inspektionsrollgang

Die Erfindung betrifft eine einen Inspektionsrollgang aufweisende Scherenanlage zum Schopfen der Enden oder zum Abtrennen von Probestücken von zu Bunden gewickeltem Walzband
bestehend aus einem Rollenbock für die Walzbandbunde, dessen
Stützebene im wesentlichen horizontal ausgerichtet ist und der
bspw. aus zwei parallelachsigen Stütz- und Antriebsrollen besteht, die einen Abstand voneinander haben, der kleiner als
der kleinste vorkommende Bandbunddurchmesser ist und auf die
die Bandbunde mit ihrem Umfang aufsetzbar sind, einen Bundöffner mit gegen die Bundoberfläche schwenkbarem Öffnungsmeißel
zum Öffnen der Bandbunde und zum teilweisen Führen des Bandes,
einer im bestimmten Abstand vom Rollenbock befindlichen Schere, deren Unter- und Obermesser beim Schnitt in einer im wesentlichen vertikalen Ebene liegen und einem Rollgang zwischen
dem Rollenbock und der Schere.

Gattungsgemäße Scherenanlagen sind bereits bekannt. Bei ihnen
werden Ober- und Untermesserträger von einem Rahmen gehalten,
der auf einer zwischen dem Inspektionsrollgang und dem Stütz-
und Antriebsbock angeordneten Achse schwenkbar gelagert ist.
Der Schwenkwinkel wird einerseits von dem Inspektionsrollgang
und andererseits von dem auf dem Stütz- und Antriebsbock befindlichen Bandbund begrenzt.

An dem Rahmen ist weiterhin ein Bundöffner befestigt, der, wenn der Rahmen zum Bandbund hin geschwenkt ist, diesen öffnet und den Bandanfang in den verhältnismäßig kleinen freien Raum zwischen dem Ober- und Untermesser führt. Dabei schleift die Bandinnenseite anfangs am Bundöffner und an dem Obermesser, wodurch eine Beschädigung der Bandinnenseite erfolgt. Erst nachdem eine bestimmte Länge des Bandes abgewickelt worden ist, kommt dieses durch sein eigenes Gewicht auf dem Inspektionsrollgang zu liegen. Dadurch können einige Meter des Bandes beschädigt werden.

Ein weiterer Nachteil ergibt sich bei der bekannten Scheren-anlage dadurch, daß das Obermesser mittels Kniehebeln gegen das Untermesser bewegt wird. Diese Kniehebel sind starkem Verschleiß unterworfen; sie müssen aus diesem Grunde öfter gewechselt werden, wodurch sich nicht unerhebliche Betriebskosten für diese Scherenanlage ergeben.

Der Erfindung liegt die Aufgabe zugrunde. die geschilderten Nachteile zu beseitigen und eine gattungsgemäße Scherenanlage derart auszubilden, daß die Bandinnenseite beim Abrollen des Bandes vom Walzband bund nicht beschädigt wird.

Diese Aufgabe wird dadurch gelöst, daß die Schere ein ortsfest stehendes Untermesser in Höhe der Auflagefläche des Rollgangs aufweist, und daß der Verstellantrieb des um eine Welle schwenkbaren Obermessers unabhängig von dem Verstellantrieb des ebenfalls um eine Welle schwenkbaren Öffnungsmeißels des Bundöffners betätigbar ist.

Vorteilhaft ist, wenn sich die Schwenkwellen für das Obermesser und für den Öffnungsmeißel auf einer Höhe mit dem Untermesser befinden, und nahe dem Rollenbock zwischen diesem und dem Untermesser angeordnet sind.

Zweckmäßigerweise werden das Obermesser und der Öffnungsmeißel um eine gemeinsame Welle schwenkbar ausgeführt; dabei
ergeben sich besondere Vorteile, wenn sowohl der Öffnungsmeißel als auch der Obermesserträger jeweils zwischen Hebelarmen
angeordnet sind, die an den über die Seiten des Rollgangs hinausragenden Enden der Welle angelenkt sind.

Es empfiehlt sich, daß die Hebelarme für den Öffnungsmeißel
kürzer sind und einen geringeren Abstand zueinander aufweisen
als die Hebelarme für den Obermesserträger.

Ein besonderer Vorzug ergibt sich, wenn die Hebelarme für den
Öffnungsmeißel vom Rollenbock weg abgewinkelt sind, wenn jeweils zwischen den beiden Öffnungsmeißelhebelarmen in deren
Knickbereich eine Führungsrolle vorgesehen, der Öffnungsmeißel
im Bereich zwischen den Hebelarmlagern und der Führungsrolle
angeordnet ist und wenn eine Niederhalterrolle an den den Hebelarmlagern entgegengesetzten Enden der Hebelarme sowie ein
Leitblech im Bereich zwischen der Führungsrolle und der Niederhalterrolle angebracht sind.

Ein Ausführungsbeispiel der Erfindung wird anhand der Zeichnung
näher erläutert. Dabei zeigen

Figur 1   eine erfindungsgemäße Scherenanlage in der Seitenansicht und

Figur 2   eine Möglichkeit der Anordnung von Obermesser und
          Öffnungsmeißel zueinander in einer Teilansicht.

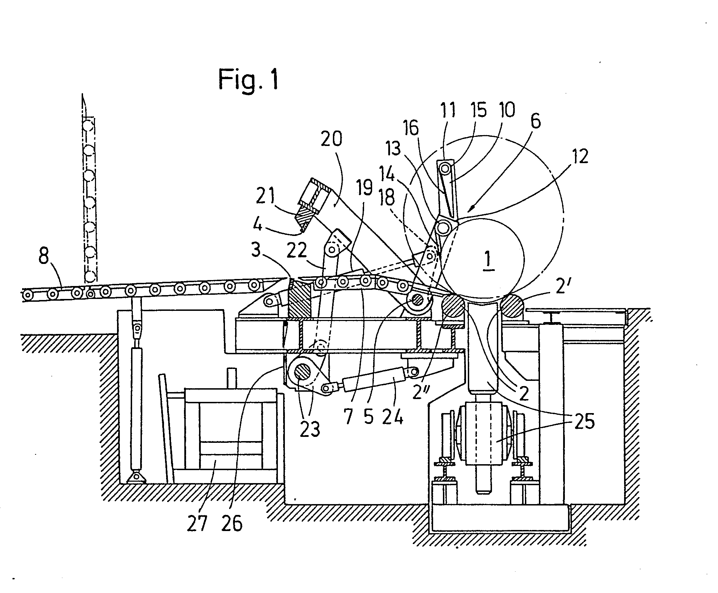

Aus Fig. 1 ist ein Walzbandbund 1 zu erkennen, der sich mit
seinem Umfang auf einem Rollenbock 2 abstützt. Der Rollenbock 2
besteht aus zwei Stütz- und Antriebsrollen 2', 2", die achsparallel zueinander angeordnet sind. Die Stütz- und Antriebsrollen 2', 2" weisen einen Abstand voneinander auf, der
kleiner als der kleinste vorkommende Bandbunddurchmesser
ist. In Höhe der Stütz- und Antriebsrollen 2', 2" ist mit
parallelem Abstand von diesem ein Untermesser 3 vorgesehen.
Ein mit diesem Untermesser 3 scherendes Obermesser 4 ist um
eine Welle 5 schwenkbar angeordnet. Die Welle 5 ist zwischen
dem Rollenbock 2 und dem Untermesser 3 parallel zu diesem und
auf annähernd gleicher Höhe mit diesem nahe dem Rollenbock 2
positioniert. Mit der Welle 5 ist ein Bundöffner 6 drehfest
gekoppelt. Zwischen dem Rollenbock 2 und dem Untermesser 3
erstreckt sich ein leicht aufwärts gewölbter Rollgang 7, der
über das Untermesser 3 hinaus als Insoektionsrollgang 8 weitergeführt ist. Vom Walzbandbund 1 aus gesehen hinter dem Untermesser 3 ist der Inspektionsrollgang 8 teilweise aus der Rollgangsebene hebbar ausgeführt. Unterhalb des hebbaren Rollgangteils ist ein Schrottkübel 27 aufgestellt, der zur Aufnahme
der geschopften Bandenden dient.

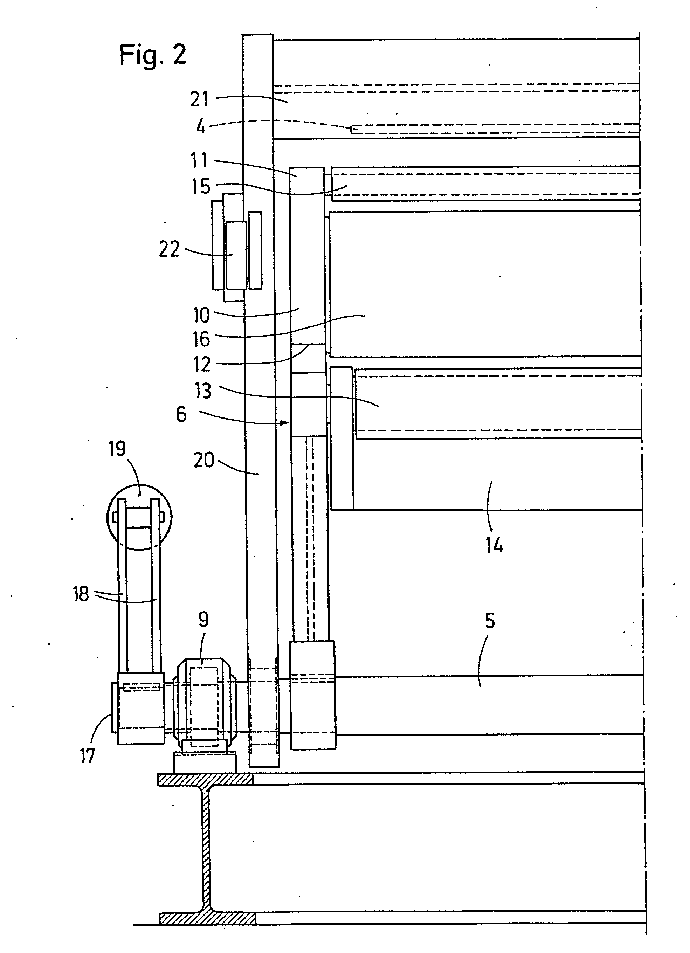

Fig. 2 zeigt den näheren Aufbau der Welle 5 sowie des Obermessers 4 und des Bundöffners 6 in der linken Teilansicht.
Die Welle 5 ist über das Lager 9 mit dem Scherenständer verbunden. Drehfest mit der Welle 5 ist ein Hebelarm 10 gekoppelt. Das freie Ende 11 des Hebelarms 10 ist vom Rollenbock 2
weg abgewinkelt 12 (siehe auch Fig. 1), wodurch der Hebelarm
10 an die Wölbung des Rollgangs 7 angepaßt ist.

Zwischen der Welle 5 und dem Knickbereich 12 ist nahe diesem
eine Führungsrolle 13 drehbewegbar am Hebelarm 10 montiert.
Nahe der Führungsrolle 13 ist zwischen dieser und der Welle 5
der Öffnungsmeißel 14 des Bundöffners 6 angebracht. Am freien
Ende 11 des Hebelarms 10 ist eine Niederhalterrolle 15 befestigt. Zwischen der Führungsrolle 13 und der Niederhalterrolle
15 ist ein Leitblech 16 positioniert.

Am Wellenstumpf 17 der Welle 5 ist ein Hebelarm 18 drehfest
aufgekeilt. Am freien Ende des Hebelarms 18 greift ein Verstellantrieb 19 an (siehe auch Fig. 1). Mittels des Verstellantriebes 19 kann über den Hebelarm 18, die Welle 5 und den
Hebelarm 10 der Öffnungsmeißel 14, die Führungsrolle 13, die
Niederhalterrolle 15 und das Leitblech 16 verschwenkt werden.
Der Schwenkbereich wird einerseits durch den Walzbandbund 1 und
andererseits durch den Rollgang 7 begrenzt.

Zwischen dem Lager 9 und dem Angriff des Hebelarms 10 an der
Welle 5 ist ein Hebelarm 20 relativ zur Welle 5 drehbar gelagert. Am freien Ende des Hebelarms 20 ist der Untermesserträger 21 der das Untermesser 4 haltert, befestigt. Im Bereich seines freien Endes ist am Hebelarm 20 eine Zug- bzw.
Druckstange 22 gelagert, die über ein Hebelarm-Winkelgetriebe
23 mit einem Verstellantrieb 24 in Verbindung steht (siehe
Fig. 1).

Die Fig. 2 stellt eine linke Teilansicht dar, welche symmetrisch zu ergänzen ist. Dabei sind auch die Verstellantriebe
19, 24 jeweils doppelt vorgesehen, um bei eventuellem Ausfall
eines Verstellantriebes noch eine sichere Funktion der Scherenanlage zu gewährleisten. Dazu ist das Hebelarm-Winkelgetriebe
23 drehfest mit dem nicht gezeigten Hebelarm-Winkelgetriebe
der rechten Seite gekoppelt.

Die Funktion der Scherenanlage wird im folgenden beschrieben:
Ein Bundwagen 25 fördert den Walzbandbund 1 zum Rollenbock 2
und setzt ihn auf diesem ab. Der Öffnungsmeißel 14 des Bundöffners 6 wird über die Verstellantriebe 19 gegen den Umfang
des Walzbandbundes 1 geschwenkt. Der Walzbandbund 1 wird durch
nicht gezeigte Antriebe über die Stütz- und Antriebsrollen 2',
2" in Drehbewegung entgegen seines Wickelsinns versetzt. Kommt
der Bandanfang während der Drehung des Walzbandbundes 1 in den

Bereich des Öffnungsmeißels 14, so hintergreift dieser den Bandanfang und leitet diesen vom Walzbandbund 1 ab. Während der Walzbandbund 1 weiter abgewickelt wird, schwenkt der Bundöffner 6 angetrieben durch die Verstellantriebe 19 vom Walzbandbund 1 weg auf den Rollgang 7 zu. Dabei ist die Schwenkgeschwindigkeit und die Bandabwickelgeschwindigkeit so aufeinander abgestimmt, daß der Bandanfang während der Schwenkbewegung des Bundöffners 6 stets zwischen der Führungsrolle 13 und der Niederhalterrolle 15 verbleibt. Das Leitblech 16 sorgt dafür, daß sich der Bundanfang nicht zwischen der Führungsrolle 13 und der Niederhalterrolle 15 hindurch auf den Walzbandbund 1 zubewegen kann. Nachdem das Band auf dem Rollgang 7 zur Auflage gekommen ist und von der Niederhalterrolle 15 auf dem Rollgang 7 gehalten wird, wird das Band solange abgewickelt, bis der Bandanfang das Untermesser 3 passiert hat. In diesem Falle ist der hebbare Teil des Inspektionsrollgangs 8 angehoben. In dieser Stellung wird das Obermesser über die Zug- und Druckstangen 22 und die Hebelarm-Winkelgetriebe 23 von den Verstellantrieben 24 auf das Untermesser 3 zubewegt. Gleichzeitig wird ein Ableitblech 26 von den Hebelarm-Winkelgetrieben 24 angetrieben über den Schrottkübel 27 geschwenkt. Sowie das Band geschopft und das geschopfte Bandende über das Ableitblech 26 in den Schrottkübel 24 gefallen ist, wird das Obermesser 4 wieder angehoben. Dabei wird das Ableitblech 26 aus dem Bereich des Schrottkübels 27 geschwenkt. In dieser Stellung kann der Schrottkübel gegebenenfalls aus seiner Mulde herausgehoben und entleert werden.

Nachdem der hebbare Bereich des Inspektionsrollganges 8 abgesenkt und das Obermesser in seine Offenstellung verbracht worden ist, wird der Walzbandbund 1 weiter abgewickelt, bis der Bandanfang das Ende des Inspektionsrollgangs erreicht hat. Nunmehr kann die offen auf dem Inspektionsrollgang 8 liegende Innenseite des Walzbandes inspiziert werden. Daraufhin wird, indem die Stütz- und Antriebsrollen 2', 2" den Walzbandbund 1 in seiner Wickelrichtung antreiben der Walzbandbund 1
wieder aufgewickelt. Während des Aufwickelvorgangs kann die
noch nicht inspizierte Außenseite des Bandes im Bereich des
Walzbandbundes 1 inspiziert werden. Im aufgewickelten Zustand
wird der Walzbandbund 1 vom Bundwagen 25 abtransportiert und
durch einen weiteren Walzbandbund ersetzt.

Um ein Probenstück zu schneiden besteht durchaus die Möglichkeit, nachdem das Band geschopft und weiter abgewickelt worden
ist, die Schere ein zweites Mal zum Schnitt kommen zu lassen.
Das Probenstück kann vom Inspektionsrollgang 8 abgenommen
werden, worauf sich dann die Inspektion der Bandinnenseite
anschließen kann.

Bezugszeichenübersicht

 1 Walzbandbund

 2 Rollenbock

 2' Stütz- und Antriebsrollen

 2" Stütz- und Antriebsrollen

 3 Untermesser

 4 Obermesser

 5 Welle

 6 Bundöffner

 7 Rollgang

 8 Inspektionsrollgang

 9 Lager

10 Hebelarm

11 freies Ende des Hebelarms

12 Winkel

13 Führungsrolle

14 Öffnungsmeißel

15 Niederhalterrolle

16 Leitblech

17 Wellenstumpf

18 Hebelarm

19 Verstellantrieb

20 Hebelarm

21 Obermesserträger

22 Zug- bzw. Druckstange

23 Hebelarm-Winkelgetriebe

24 Verstellantrieb

25 Bundwagen

26 Ableitblech

27 Schrottkübel

SIEMAG transplan GmbH, 5902 Netphen 1

Patentansprüche

1. Einen Inspektionsrollgang aufweisende Scherenanlage
   zum Schopfen der Enden oder zum Abtrennen von Probestücken von zu Bunden gewickeltem Walzband bestehend
   aus einem Rollenbock für die Walzbandbunde, dessen Stützebene im wesentlichen horizontal ausgerichtet ist und der
   bspw. aus zwei parallelachsigen Stütz- und Antriebsrollen
   besteht, die einen Abstand voneinander haben, der kleiner
   als der kleinste vorkommende Bandbunddurchmesser ist und
   auf die die Bandbunde mit ihrem Umfang aufsetzbar sind,
   einen Bundöffner mit gegen die Bundoberfläche schwenkbarem
   Öffnungsmeißel zum Öffnen der Bandbunde und zum teilweisen
   Führen des Bandes, einer im bestimmten Abstand vom Rollenbock befindlichen Schere, deren Unter- und Obermesser beim
   Schnitt in einer im wesentlichen vertikalen Ebene liegen
   und einem Rollgang zwischen dem Rollenbock und der Schere,
   d a d u r c h   g e k e n n z e i c h n e t ,
   daß die Schere ein ortsfest stehendes Untermesser (3) in
   Höhe der Auflagefläche des Rollgangs (7) aufweist, und daß
   der Verstellantrieb (24) des um eine Welle schwenkbaren
   Obermessers (4) unabhängig von dem Verstellantrieb (19)
   des ebenfalls um eine Welle schwenkbaren Öffnungsmeißels
   (14) des Bundöffners (6) betätigbar ist.

2. Scherenanlage nach Anspruch 1,
   d a d u r c h   g e k e n n z e i c h n e t ,
   daß sich die Schwenkwellen für das Obermesser (4) und für
   den Öffnungsmeißel (14) auf einer Höhe mit dem Untermesser

-2-

(3) befinden, und nahe dem Rollenbock (2) zwischen diesem und dem Untermesser (3) angeordnet sind.

3. Scherenanlage nach Anspruch 1 oder 2,
   d a d u r c h   g e k e n n z e i c h n e t ,
   daß das Obermesser (4) und der Öffnungsmeißel (14) um eine gemeinsame Welle (5) verschwenkbar sind.

4. Scherenanlage nach mindestens einem der Ansprüche 1 bis 3,
   d a d u r c h   g e k e n n z e i c h n e t ,
   daß sowohl der Öffnungsmeißel (14) als auch der Obermesserträger (21) jeweils zwischen zwei Hebelarmen (10, 20) angeordnet sind, die an den über die Seiten des Rollganges hinausragenden Enden der Welle (5) angelenkt sind.

5. Scherenanlage nach Anspruch 3 oder 4,
   d a d u r c h   g e k e n n z e i c h n e t ,
   daß die Hebelarme (10) für den Öffnungsmeißel (14) kürzer sind und einen geringeren Abstand voneinander aufweisen als die Hebelarme (20) für den Obermesserträger (21).

6. Scherenanlage nach mindestens einem der Ansprüche 1 bis 5,
   d a d u r c h   g e k e n n z e i c h n e t ,
   daß die Hebelarme (10) für den Öffnungsmeißel (14) vom Rollenbock (2) weg abgewinkelt sind, daß jeweils zwischen den beiden Öffnungsmeißelhebelarmen (10) in deren Knickbereich (12) eine Führungsrolle (13) vorgesehen, der Öffnungsmeißel (14) im Bereich zwischen den Hebelarmlagern und der Führungsrolle (13) angeordnet ist und daß eine Niederhalterrolle (15) an den den Hebelarmlagern entgegengesetzten Enden der Hebelarme (10) sowie ein Leitblech (16) im Bereich zwischen der Führungsrolle (13) und der Niederhalterrolle (15) angebracht sind.

1.12. 82

## Fig. 1

0114935

1.12.82

Fig. 2